# EUROPÄISCHE PATENTANMELDUNG

(11) **EP 2 683 047 A1**
(43) Veröffentlichungstag der Anmeldung: **08.01.2014**
(21) Anmeldenummer: 12174747.1
(22) Anmeldetag: 03.07.2012
(51) Int. Cl.: H02H 7/08, H02H 7/085

(54) **Vorrichtung zum Schutz eines Verbrauchers**

(71) Anmelder: Siemens Aktiengesellschaft, 80333 München (DE)
(72) Erfinder: Feil, Wolfgang, 92421 Schwandorf (DE); Maier, Martin, 92681 Erbendorf (DE); Pfitzner, Klaus, 92224 Amberg (DE)

(57) **Zusammenfassung**

Die Erfindung betrifft eine Vorrichtung (1) zum Schutz eines Verbrauchers (2) vor einer Überlast. Um eine verbesserte Vorrichtung (1) bereitzustellen, welche insbesondere hinsichtlich ihrer thermischen Belastung optimiert ausgebildet ist, wird vorgeschlagen, dass die Vorrichtung (1) eine eingangsseitige Anschlussstelle (106), eine ausgangsseitige Anschlussstelle (107), eine erste Strombahn, welche eine zwischen der eingangsseitigen und ausgangsseitigen Anschlussstelle (106,107) angeordnete erste und zweite Leitung (101,102) umfasst, und eine Überwachungseinrichtung, zur Ermittlung der anstehenden Überlast des elektrischen Verbrauchers (2) umfasst, wobei im Normalzustand der Vorrichtung (1) die eingangsseitige Anschlussstelle (106) mit der ausgangsseitigen Anschlussstelle (107) geräteintern elektrisch leitend verbunden ist und im Überlastzustand der Vorrichtung (1) der Stromfluss zwischen der eingangsseitigen Anschlussstelle (106) und ausgangsseitigen Anschlussstelle (107) unterbunden ist, wobei die Überwachungseinrichtung einen Messwandler (10), welcher die erste Leitung (101) mit der zweiten Leitung (102) elektrisch leitend verbindet, umfasst, wobei der Messwandler (10) ein erstes Material (5) umfasst, welches im Normalzustand der Vorrichtung durch einen strombedingten Temperaturanstieg am Messwandler (10) einen Phasenübergang vollzieht.

## Beschreibung

Die Erfindung betrifft eine Vorrichtung zum Schutz eines Verbrauchers vor einer Überlast, insbesondere einer thermischen Überlast.

Ein Verbraucher ist insbesondere ein Elektromotor (z.B. Asynchronmotor). Eine thermische Überlast am Verbraucher entsteht durch einen überhöhten Stromfluss. Ein überhöhter Stromfluss kann beispielsweise durch eine mechanische Überlast an einem Elektromotor oder durch einen Ausfall einer oder zweier Strompfade (Phasen) des Elektromotors hervorgerufen werden. Hierbei kommt es zu einer unerwünschten Temperaturentwicklung am Verbraucher, was letztendlich zu einer Beschädigung des Verbrauchers führen kann.

Zur Ermittlung einer anstehenden thermischen Überlast eines elektrischen Verbrauchers werden meist Vorrichtungen in den Strompfad, über welchen der Verbraucher mit elektrischer Energie versorgt wird, integriert, so dass mittels dieser Vorrichtungen eine anstehende thermische Überlast detektiert werden kann. Hierbei kann eine einphasige aber auch eine mehrphasige Überwachung erfolgen, d.h. es kann ein einzelner Strompfad (eine Phase) aber auch mehrere Strompfade (mehrere Phasen) des Verbrauchers überwacht werden.

Die entsprechenden Vorrichtungen weisen je zu überwachenden Strompfad eine Strombahn auf, über welche die über den Strompfad erfolgende Energieversorgung des Verbrauchers geführt wird. Die elektrische Energie des Verbrauchers wird somit mittels der Strombahn durch die Vorrichtung geleitet. Mittels einer Überwachungseinrichtung der Vorrichtung wird der Stromfluss der Strombahn überwacht, so dass eine anstehende Überlast des Verbrauchers detektiert werden kann. Derartige Vorrichtungen sind beispielsweise Überlastrelais oder Leistungsschalter. Ein Leistungsschalter weist für einen nachgeschalteten Verbraucher neben einem Schutz vor einer thermischen Überlast durch einen A-Auslöser ferner einen Kurzschlussschutz durch einen N-Auslöser auf.

Die Vorrichtung der vorliegenden Anmeldung soll insbesondere ein Überlastschutz für einen Verbraucher (z.B. Elektromotoren, Leitungen, Transformatoren und Generatoren) bereitstellen.

An eine Vorrichtung zur Ermittlung einer thermischen Überlast eines Verbrauchers können unterschiedliche Anforderungen gestellt werden:
- Die Vorrichtung soll möglichst sowohl AC- als auch DC-Ströme überwachen können, so dass sowohl AC- als auch DC-Verbraucher auf Überlast überwacht werden können.
- Die Vorrichtung soll einen möglichst großen Einstellbereich aufweisen. Der Einstellbereich ist der Bereich, in welchem eine Überwachung des Betriebsstromes des elektrischen Verbrauchers erfolgen kann. Er wird durch die Betriebsstromobergrenze I_{O} und Betriebsstromuntergrenze I_{U} begrenzt (I_{O} zu I_{U}) . Mittels eines Einstellmittels (z.B. Einstellschraube) an der Vorrichtung kann die Vorrichtung auf den jeweiligen Nennstrom des Verbrauchers eingestellt werden, so dass eine gezielte Überwachung des nachgeschalteten zu überwachenden Verbrauchers erfolgen kann.
- Die Vorrichtung soll eine möglichst geringe Verlustleistung erzeugen.
- Die Vorrichtung soll eine möglichst einfache galvanische Trennung zwischen der zu überwachenden Strombahn und der Überwachungseinrichtung, welche die Überlast detektiert, aufweisen.
- Die Vorrichtung soll ein thermisches Gedächtnis besitzen. D.h. wird eine anstehende thermische Überlast eines Verbrauchers ermittelt, so sollte die Stromzufuhr zum Verbraucher solange unterbrochen werden, bis ein Abkühlen des Verbrauchers sichergestellt ist. Es sollte somit kein sofortiges Zuschalten eines Verbrauchers nach einer ermittelten thermischen Überlast ermöglicht werden.

Bei einer anstehenden thermischen Überlast eines Verbrauchers kommt es in den einzelnen Strompfaden (Phasen) des Verbrauchers zu einem erhöhten Stromanstieg. Die dem Verbraucher vorgeschaltete Vorrichtung zur Überwachung einer thermischen Überlast des Verbrauchers kann folglich durch eine Überwachung seiner Strombahn diesen erhöhten Stromanstieg detektieren und auswerten. Hierfür können unterschiedliche Messprinzipien angewandt werden. Die Ermittlung einer anstehenden Überlast kann somit mittels unterschiedlicher Überwachungseinrichtungen der Vorrichtung erfolgen. Überwachungseinrichtungen zur Detektion einer Überlast eines Verbrauchers umfassen üblicherweise je zu überwachende Phase des Verbrauchers an der entsprechenden Strombahn einen Bimetallauslöser, einen Stromwandler oder einen Shunt.

Bei einer Überwachung mittels eines Bimetallauslösers wird die zu überwachende Strombahn mit einem Bimetallauslöser derart gekoppelt, dass es durch den Stromanstieg zu einer Erwärmung des Bimetallauslösers und letztendlich zu einer räumlichen Auslenkung eines Teils des Bimetallauslösers kommt. Diese Auslenkung wird detektiert und weiter ausgewertet. Mittels eines Bimetallauslösers können sowohl Gleichströme als auch Wechselströme erfasst werden. Der typische Einstellbereich des Bimetallauslösers liegt bei 1 zu 1,6. Nachteilig am Bimetallauslöser ist, dass er eine hohe Verlustleistung generiert. Das thermische Gedächtnis und die galvanische Trennung zwischen den einzelnen Strompfaden (Phasen) sind bei dem Bimetallauslöser hingegen mit geringem Aufwand zu realisieren.

Bei einer Überwachung mittels eines Stromwandlers ermittelt der jeweilige Stromwandler den Stromfluss seiner Strombahn, so dass eine Auswerteeinheit eine weiterführende Analyse des Stromflusses durchführen kann und letztendlich eine anstehende Überlast detektieren kann. Nachteilig an dieser Messmethode ist, dass keine DC-Ströme erfasst werden können. Der Einstellbereich liegt bei 1 zu 10 und die Verlustleistung ist niedrig. Ein thermisches Gedächtnis kann jedoch durch die Stromwandler selbst nicht nachgebildet werden.

Bei einer Überwachung mittels eines Shunts ist der Shunt in der Strombahn integriert, so dass über diesen ein den Stromfluss charakterisierender Spannungsabgriff erfolgen kann. Durch eine nachgeschaltete Analyse der am Shunt anliegenden Spannung kann eine anstehende thermische Überlast ermittelt werden. Mittels eines Shunt-Messverfahrens ist eine Erfassung von AC/DC-Strömen möglich. Der Einstellbereich liegt üblicherweise bei 1 zu 4. Nachteilig an dem Messverfahren mittels eines Shunts ist, dass durch den Spannungsabgriff am Shunt kein thermisches Gedächtnis nachgebildet wird und die galvanische Trennung der einzelnen Phasen nur mit großem Aufwand möglich ist.

Der Erfindung liegt die Aufgabe zugrunde, eine verbesserte Vorrichtung bereitzustellen mit welcher eine Ermittlung einer anstehenden Überlast eines Verbrauchers erfolgen kann. Insbesondere soll die Vorrichtung hinsichtlich ihrer thermischen Belastungen optimiert ausgebildet sein. Ferner sollen vorzugsweise mittels der Vorrichtung sowohl Gleichströme als auch Wechselströme überwacht werden können. Ebenso soll vorzugsweise eine einfache galvanische Trennung der Überwachungseinrichtung von der zu überwachenden Strombahn ermöglicht werden.

Mindestens eine dieser Aufgaben wird gelöst durch eine Vorrichtung gemäß Anspruch 1, d.h. durch eine Vorrichtung zum Schutz eines Verbrauchers vor einer Überlast, wobei die Vorrichtung eine eingangsseitige Anschlussstelle, eine ausgangsseitige Anschlussstelle, eine erste Strombahn, welche eine zwischen der eingangsseitigen und ausgangsseitigen Anschlussstelle angeordnete erste und zweite Leitung umfasst, und eine Überwachungseinrichtung, zur Ermittlung der anstehenden Überlast des elektrischen Verbrauchers, umfasst, wobei im Normalzustand der Vorrichtung die eingangseitige Anschlussstelle mit der ausgangsseitigen Anschlussstelle geräteintern elektrisch leitend verbunden ist und im Überlastzustand der Vorrichtung der Stromfluss zwischen der eingangseitigen Anschlussstelle und ausgangsseitigen Anschlussstelle unterbunden ist, wobei die Überwachungseinrichtung einen Messwandler, welcher die erste Leitung mit der zweiten Leitung elektrisch leitend verbindet, umfasst, wobei der Messwandler ein erstes Material umfasst, welches im Normalzustand der Vorrichtung durch einen strombedingten Temperaturanstieg am Messwandler einen Phasenübergang vollzieht.

Vorteilhafte Weiterbildungen der Erfindung sind in den abhängigen Ansprüchen 2 bis 15 angegeben.

Die erste Strombahn ist insbesondere ein Teil einer Zuleitung einer Energieversorgung des Verbrauchers. Die Zuleitung wird ebenso Hauptstrombahn oder Phase genannt. Im aktiven Betrieb des Verbrauchers (z.B. Elektromotor) fließt durch die erste Strombahn und somit durch den Messwandler ein zeitabhängiger Motorstrom, welcher im Messwandler in Abhängigkeit der Stromhöhe und der Stromflusszeit zu einer definierten Erwärmung des Messwandlers (strombedingte Erwärmung) führt. Bei einer anstehenden Überlast des Verbrauchers ist das thermische Verhalten des Messwandlers gegenüber dem thermischen Verhalten im Standardbetrieb des Verbrauchers charakteristisch. Insbesondere liegt bei einer anstehenden Überlast am Verbraucher gegenüber dem Standardbetrieb des Verbrauchers am Messwandler eine erhöhte Temperatur vor.

Die Ermittlung, ob eine Überlast am Verbraucher bevorsteht, erfolgt mittels einer Auswertung der strombedingten Erwärmung am Messwandler. Der Überlastzustand der Vorrichtung liegt vor, wenn die Temperatur am Messwandler bzw. ein hieraus abgeleiteter Wert einen Überlasttemperaturschwellwert T_{Ü}, welcher eine bevorstehende Überlast am Verbraucher charakterisiert, überschreitet.

Der Normalzustand der Vorrichtung liegt vor, wenn die Temperatur am Messwandler unterhalb des Überlasttemperaturschwellwerts T_{Ü} liegt. Im Normalzustand der Vorrichtung weist der Verbraucher somit den ordnungsgemäßen Betrieb (Standardbetrieb) auf.

Das erste Material am Messwandler ist derart ausgebildet, dass der Phasenübergang durch den strombedingten Temperaturanstieg am Messwandler bereits vor dem Eintreten des Überlastzustandes der Vorrichtung erfolgt.

Bei dem Phasenübergang des ersten Materials handelt es sich insbesondere um einen Phasenübergang erster Ordnung. Vorzugsweise vollzieht das erste Material durch den strombedingten Temperaturanstieg am ersten Messwandler bei Überschreiten seiner Phasenübergangstemperatur T_{P} einen Phasenübergang von fest auf flüssig (Schmelzen). Sinkt die Temperatur unterhalb der Phasenübergangstemperatur T_{P} so erfolgt das Erstarren des ersten Materials (flüssig auf fest).

Der Phasenübergang erfolgt vorzugsweise erst nach Eintreten einer gegenüber der durchschnittlich normalen Betriebstemperatur am Messwandler erhöhten Temperatur am Messwandler (mindestens 10% beabstandet zur durchschnittlich normalen Betriebstemperatur am Messwandler).

Das erste Material ist beispielsweise Polyoxymethylen, Polypropylen, ein Salzhydrat oder ein Zuckeralkohol. Vorzugsweise ist das erste Material Polyoxymethylen.

Ein mit der Vorrichtung erzielter Vorteil besteht insbesondere darin, dass mittels der Vorrichtung sowohl AC- als auch DC-Ströme erfasst werden können. Es kann somit eine anstehende Überlast bei AC- und DC-Verbrauchern ermittelt werden. Ferner kann ein gegenüber einem Bimetall-Messverfahren verbesserter Einstellbereich erzielt werden. Durch den Phasenübergang des ersten Materials kann die strombedingte Erwärmung des ersten Messwandlers verzögert werden, so dass der Messbereich vergrößert werden kann. Ferner wird durch den Phasenübergang des ersten Materials der strombedingte Temperaturanstieg innerhalb der Vorrichtung reduziert, so dass die thermische Belastung durch den Messwandler auf Komponenten der Vorrichtung (z.B. einen Träger) reduziert wird. Hierdurch kann die Lebensdauer der Vorrichtung verlängert werden. Ein weiterer Vorteil besteht ferner darin, dass mittels des Messwandlers ein thermisches Gedächtnis realisiert werden kann, da bei einer anstehenden Überlast der Messwandler stark erhitzt wird, so dass anhand der Temperatur und somit Abkühlung des Messwandlers ein Abkühlverhalten des Verbrauchers nachvollzogen werden kann. Vorzugsweise wird durch eine Auswerteeinheit der Vorrichtung die Abkühlung des Messwandlers ausgewertet, so dass ein vorzeitiges Aktiveren des Verbrauchers verhindert werden kann.

Das erste Material der Vorrichtung vollzieht vor Erreichen des Überlastzustandes der Vorrichtung ein nicht zu vermeidender Phasenwechsel. Hierdurch kann der Temperaturanstieg am Messwandler vermindert werden. Die Verminderung erfolgt durch den "zeitweiligen Verbrauch" der erzeugten Wärme als latente Wärme, die für den thermischen Phasenübergang aufgebracht werden muss. Durch die Verminderung der Maximaltemperatur am Messwandler können nun Bauteile eingesetzt werden, welche ansonsten nicht mehr geeignet wären.

In einer vorteilhaften Ausführungsform der Erfindung wird der Normalzustand ferner unterteilt in einen Standardbetriebszustand und einem erhöhten Betriebszustand. Der Standardbetriebszustand liegt vor, wenn die Temperatur am Messwandler kleiner 100°C ist. Ist die Temperatur am Messwandler größer 100 °C so liegt bis zum Erreichen des Überlastzustandes und somit bis zum Erreichen des Überlasttemperaturschwellwerts T_{Ü} der erhöhte Betriebszustand vor. Bei dem erhöhten Betriebszustand liegt am Messwandler somit gegenüber dem Standardbetriebszustand eine höhere Temperatur vor. Der Phasenübergang des ersten Materials des Messwandlers findet vorzugsweise innerhalb des erhöhten Betriebszustandes statt.

In einer weiteren vorteilhaften Ausführungsform der Erfindung umfasst der Messwandler ein geschlossenes Behältnis, wobei sich im Inneren des geschlossenen Behältnisses das erste Material befindet.

Der Messwandler besteht somit aus mindestens zwei separaten Materialien (dem ersten Material und dem Material des Behältnisses) .

Das Behältnis ist vorzugsweise ein Behälter, welcher für das erste Material dicht ist, so dass dieses in seinen beiden Aggregatzuständen hinsichtlich des Phasenübergangs nicht entweichen kann. Die Geometrie und das Material des geschlossenen Behältnisses sind insbesondere derart ausgebildet, dass das erste Material vom Behältnis sicher umschlossen ist und dass das erste Material im Behältnis wiederholt sicher den Phasenübergang vollziehen kann.

Der Phasenübergang des ersten Materials ist vorzugweise von fest zu flüssig (Schmelzen) bzw. von flüssig zu fest (Erstarren) .

Vorzugsweise ist das geschlossene Behältnis röhrenförmig ausgebildet.

In einer weiteren vorteilhaften Ausführungsform der Erfindung ist das Behältnis spiralförmig oder mäanderförmig ausgebildet. Auf diese Weise kann die Längenausdehnung des Messwandlers reduziert werden, so dass der zur Verfügung stehende Bauraum innerhalb der Vorrichtung optimiert ausgenutzt werden kann.

In einer weiteren vorteilhaften Ausführungsform der Erfindung ist das Behältnis elektrisch leitend. Das Material des Behältnisses ist somit elektrisch leitend, so dass der Stromfluss zwischen der ersten und zweiten Leitung direkt über das elektrisch leitende Behältnis geführt wird.

Insbesondere sind die Geometrie und das Material des geschlossenen Behältnisses derart ausgebildet, dass anhand der strombedingten jouleschen Verlustleistung eine Ermittlung der Überlast am Verbraucher anhand der thermischen Auswertung des Messwandlers erfolgen kann. Das Material des geschlossenen Behältnisses weist vorzugsweise CrAl-Stahl, Manganin, CuNi und/oder Cu auf. Vorzugsweise ist das geschlossene Behältnis vollständig aus einem dieser Materialien.

In einer weiteren vorteilhaften Ausführungsform der Erfindung ist zwischen dem elektrisch leitenden Material des Behältnisses und dem ersten Material eine elektrisch isolierende Schicht angeordnet.

Phasenübergangsmaterialien (fest-flüssig) können ebenso selbst Strom tragen. Um die Alterung der Phasenübergangsmaterialen zu verringern und ferner die Herstellung / Projektierbarkeit der Vorrichtung zu verbessern, ist es daher vorteilhaft, wenn zwischen dem elektrisch leitenden Material des Behältnisses und dem ersten Material eine elektrisch isolierende Schicht angeordnet ist. Das erste Material wird durch die elektrisch isolierende Schicht vollständig vom elektrisch leitenden Material des Behältnisses abgeschottet.

Die elektrisch isolierende Schicht weist vorzugsweise eine Wärmeleitfähigkeit von größer als 0,2 W/mK auf. Ist die elektrisch isolierende Schicht PA66/Fortron/Tedur, so kann eine Wärmeleitfähigkeit von ca. 0.3 W/mK erzielt werden. Ist die elektrisch isolierende Schicht Glimmer, so kann eine Wärmeleitfähigkeit von ca. 0.5 W/mK erzielt werden. Ist die elektrisch isolierende Schicht eine Keramik, so kann eine Wärmeleitfähigkeit von ca. 100 W/mK erzielt werden.

Die elektrisch isolierende Schicht ist vorzugsweise eine Keramik.

Die elektrisch isolierende Schicht kann beispielsweise als Oxidschicht auf der elektrisch leitenden Schicht des Behältnisses ausgebildet sein.

Vorzugsweise ist durch eine zusätzliche Schicht zwischen dem ersten Material und dem elektrisch leitenden Material des Behältnisses ein Material eingebracht, welches korrosiven Effekten zwischen dem elektrisch leitenden Material des Behältnisses und dem ersten Material entgegenwirkt. Derartige Materialien sind beispielsweise Platin, Titan, Gold oder Nickel. Die Wahl des eingebrachten Materials ist insbesondere in Abhängigkeit des Materials des Behältnisses und des ersten Materials zu treffen.

In einer weiteren vorteilhaften Ausführungsform der Erfindung ist das Material des Behältnisses elektrisch isolierend.

Das Behältnis ist hierbei derart ausgebildet, dass die erste Leitung sowie die zweite Leitung das erste Material kontaktiert. Der Stromfluss zwischen der ersten und zweiten Leitung wird über das erste Material, welches elektrisch leitend ist, geführt. Das elektrisch isolierende Behältnis dient dem sicheren Tragen des ersten Materials sowie dem elektrischen Isolieren des ersten Materials gegenüber angrenzenden Bauelementen der Vorrichtung.

Die Geometrie des geschlossenen Behältnisses sowie das erste Material sind derart ausgebildet, dass zur thermischen Ermittlung einer anstehenden Überlast am Verbraucher die notwendige joulesche Verlustleistung durch das erste Material geliefert werden kann.

Das Material des geschlossenen Behältnisses weist vorzugsweise Keramik, Glimmer, PA66, Fortron oder Tedur auf. Vorzugsweise ist das geschlossene Behältnis vollständig aus einem dieser Materialien, insbesondere aus Keramik.

Ein Messwandler, bei welchem das Behältnis elektrisch isolierend ist, eignet sich besonders für hochohmige Anwendungen.

Vorzugsweise ist das Behältnis durch Innenkonturen derart ausgebildet, dass durch das erste Material im festen sowie im flüssigen Zustand eine Strombahn mit einer definierten Länge ausgebildet ist.

In einer weiteren vorteilhaften Ausführungsform der Erfindung umfasst der Messwandler ein elektrisch leitendes bandförmiges Material, welches mäanderförmig oder schneckenförmig geformt ist, wobei zwischen zwei benachbarten Flächen des mäanderförmig oder schneckenförmig geformten elektrisch leitenden bandförmigen Materials das erste Material angeordnet ist.

Das elektrisch leitende Material ist bandförmig ausgebildet und ist über dessen Längsachse zu einer Mäanderform oder Schneckenform geformt.

Zwischen zwei benachbarten Flächen des bandförmigen elektrisch leitenden mäanderförmigen oder schneckenförmigen Körpers sind zumindest Stellenweise die Zwischenräume mit dem ersten Material gefüllt. Das erste Material könnte beispielsweise als punktuell vernetztes Polyethylen in den Zwischenräumen des bandförmigen elektrisch leitenden Materials eingebracht sein.

Die Beabstandung der Seitenflächen der Zwischenräume zueinander sowie die Wahl des ersten Materials sind in Abhängigkeit der Kapillarität zu treffen. Es muss insbesondere sichergestellt werden, dass das erste Material bei einem Phasenübergang von fest zu flüssig (im Normalzustand der Vorrichtung sowie im Überlastzustand der Vorrichtung) sich nicht aus den Zwischenräumen verflüchtigt.

Die zwei benachbarten Flächen des bandförmigen Materials liegen sich vorzugsweise parallel gegenüber.

In einer weiteren vorteilhaften Ausführungsform der Erfindung weist das erste Material eine maximale Dicke von 1 mm auf. Die zu verwendende Dicke des ersten Materials (Phasenübergangs-Material) ist insbesondere von dessen Material abhängig. Das erste Material ist möglichst dünn und möglichst großflächig am ersten Messwandler verteilt.

Vorzugsweise ist die durch das erste Material gebildete Schicht zwischen 0,2 mm und 0,8 mm, insbesondere 0,5 mm, dick.

Da die gängigen Phasenübergangsmaterialien im Vergleich zu Metallen (aus denen die Strombahn üblicherweise besteht) eher schlechte Wärmeleiter sind, ist es vorteilhaft, wenn das erste Material eine möglichst große Oberfläche am Messwandler aufweist und selbst nur dünn aufgetragen ist.

Vorzugsweise ist mindestens 15 % der Oberfläche des Behältnisses (Außenseite und Innenseite) bzw. das bandförmige Material des Messwandlers vom ersten Material bedeckt.

In einer weiteren vorteilhaften Ausführungsform der Erfindung umfasst die Überwachungseinrichtung ferner eine Temperaturmesseinheit, einen Träger und eine Auswerteeinheit, wobei die Temperaturmesseinheit auf dem Träger galvanisch getrennt von dem Messwandler angeordnet ist und eine Temperatur des Messwandlers erfassen kann, wobei die Auswerteeinheit mittels erfasster Temperaturen der Temperaturmesseinheit ein zeitliches Erwärmungsverhalten des Messwandlers ermitteln kann und durch eine Auswertung des ermittelten zeitlichen Erwärmungsverhaltens des Messwandlers eine anstehende Überlast am Verbraucher ermittelt.

Durch die Temperaturmesseinheit, insbesondere durch einen Temperaturfühler der Temperaturmesseinheit, kann die Temperatur des Messwandlers erfasst und der Auswerteeinheit bereitgestellt werden. Seitens der Auswerteeinheit kann anhand der erfassten Temperaturen der Temperaturmesseinheit das charakteristische Erwärmungsverhalten des Messwandlers ermittelt und ausgewertet werden, so dass hieraus eine anstehende Überlast am Verbraucher erkannt wird.

Durch die Auswerteeinheit erfolgt vorzugsweise eine Analyse der ermittelten Temperatur des Messwandlers über die Zeit, so dass hieraus eine anstehende Überlast am Verbraucher erkannt werden kann. Hierfür wird vorzugsweise das Erwärmungsverhalten des Messwandlers während eines definierten Zeitintervalls ausgewertet.

Unter dem Erwärmungsverhalten des Messwandlers wird insbesondere die zeitliche Veränderung der durch die Temperaturmesseinheit erfassten Temperatur einer Temperaturmessstelle des Messwandlers oder die zeitliche Veränderung einer Temperaturdifferenz zwischen zwei bzw. mehreren Temperaturmessstellen (z.B. Temperaturdifferenz zwischen der Temperatur des Messwandlers und einer Referenztemperatur) verstanden. Durch diese zeitliche Änderung der Temperatur bzw. der Temperaturdifferenz zweier Temperaturmessstellen, also dem Erwärmungsverhalten, kann auf den zeitlichen Stromverlauf geschlossen werden. Anhand dieses zeitlichen Stromverlaufs kann wiederum auf einen Überlastzustand am Verbraucher geschlossen werden.

Vorzugsweise erfolgen die zeitliche Abtastung der Temperaturmessstelle/-n, die eventuelle Temperaturdifferenzbestimmung, die Bestimmung der zeitlichen Temperaturänderung und der Rückschluss auf den zeitlichen Stromverlauf bzw. Überlastzustand in der Auswerteeinheit.

Die Auswerteeinheit versetzt die Vorrichtung bei einer ermittelten anstehenden Überlast eines Verbrauchers (Überschreitung des Überlasttemperaturschwellwert T_{Ü}) von ihrem Normalzustand in den Überlastzustand. Innerhalb der Vorrichtung ist die erste Strombahn im Normalzustand elektrisch leitend. Ermittelt die Auswerteeinheit eine anstehende Überlast, so wird daraufhin der Stromfluss über die erste Strombahn verhindert. Im Überlastzustand ist die erste Strombahn somit innerhalb der Vorrichtung unterbrochen, so dass der Stromfluss über die erste Strombahn verhindert wird.

In einer weiteren vorteilhaften Ausführungsform der Erfindung betätigt bei einer ermittelten anstehenden Überlast die Auswerteinheit ein Schaltschloss der Vorrichtung, so dass durch die Betätigung des Schaltschlosses ein Stromfluss über die erste Strombahn unterbunden wird. Die Betätigung des Schaltschlosses kann z.B. elektronisch oder mittels eines mechanischen Auslösers erfolgen. Durch das Öffnen des Schaltschlosses wird der Stromfluss in der ersten Strombahn unterbrochen.

In einer weiteren vorteilhaften Ausführungsform der Erfindung umfasst die Vorrichtung ferner einen Kurzschlussauslöser, wobei bei einem Auslösen des Kurzschlussauslösers das Schaltschloss betätigt wird.

In einer weiteren vorteilhaften Ausführungsform der Erfindung kann die Auswerteeinheit anhand eines Vergleichs des ermittelten Erwärmungsverhaltens des Messwandlers mit einem in der Auswerteeinheit hinterlegten Referenzwert eine anstehende Überlast am Verbraucher ermitteln.

Die Temperaturmesseinheit ist dazu ausgebildet der Auswerteeinheit Temperaturen zu übermitteln, so dass die Auswerteeinheit ein Erwärmungsverhalten des Messwandlers ermitteln kann. Da in der Auswerteeinheit ein Referenzwert hinterlegt ist, kann durch einen Vergleich des ermittelten vorliegenden Erwärmungsverhaltens mit dem Referenzwert ein Rückschluss auf den vorliegenden Betriebszustand des Verbrauchers gewonnen werden (Auswertung). Steht eine Überlast an, so liegt im Vergleich zum Nennbetrieb ein erhöhter Stromfluss und somit eine erhöhte Temperatur vor. Die erhöhte Temperatur führt zu einem charakteristischen Erwärmungsverhalten des Messwandlers, welcher durch einen Abgleich mit dem hinterlegten Referenzwert erkannt werden kann.

Durch den Referenzwert wird insbesondere das Erwärmungsverhalten des Messwandlers in Abhängigkeit des Stromflusses durch den Messwandler über die Zeit charakterisiert, so dass eine Überlast am Verbraucher erkannt werden kann. Durch einen Vergleich des ermittelten Erwärmungsverhaltens des Messwandlers mit dem Referenzwert kann somit zwischen einem durch den Nennbetrieb bedingten Erwärmungsverhalten (Normalzustand) und einem eine anstehende Überlast charakterisierendes Erwärmungsverhalten (Überlastzustand) des Messwandlers unterschieden werden. Im Nennbetrieb liegt der Normalzustand vor und bei der ermittelten anstehenden Überlast wird der Überlastzustand herbeigeführt.

In einer weiteren vorteilhaften Ausführungsform der Erfindung umfasst die Temperaturmesseinheit einen ersten Temperaturfühler zum Erfassen der Temperatur des Messwandlers. Der erste Temperaturfühler kann insbesondere eine Temperatur an einer ersten Messstelle des Messwandlers erfassen und der Auswerteeinheit bereitstellen. Der erste Temperaturfühler ist vorzugsweise auf der dem Messwandler abgewandten Seitenfläche des Trägers angeordnet.

In einer weiteren vorteilhaften Ausführungsform der Erfindung umfasst die Temperaturmesseinheit ferner einen zweiten Temperaturfühler, wobei der zweite Temperaturfühler eine Referenztemperatur erfassen kann, wobei die Auswerteeinheit eine anstehende Überlast am Verbraucher mittels der erfassten Temperaturen des ersten und zweiten Temperaturfühlers ermitteln kann.

Die Referenztemperatur kann z.B. dezentral zum Messwandler innerhalb der Vorrichtung ermittelt werden; d.h. die Temperatur des Messwandlers wird nicht durch den zweiten Temperaturfühler erfasst. Die Auswerteeinheit kann somit das Erwärmungsverhalten des Messwandlers mittels erfasster Temperaturen des Messwandlers durch den ersten Temperaturfühler und erfasster Referenztemperaturen des zweiten Temperaturfühlers ermitteln und auswerten.

Es ist jedoch ebenso denkbar, dass als Referenztemperatur eine Temperatur an einer Temperaturmessstelle des Messwandlers erfasst wird, welche nicht durch den ersten Temperaturfühler erfasst wird. Ist die Referenztemperatur des zweiten Temperaturfühlers eine Temperatur des Messwandlers, so ist der zweite Temperaturfühler derart auf dem Träger angeordnet, dass er eine Temperatur einer Messstelle des Messwandlers erfassen kann.

Durch einen Abgleich einer erfassten Temperatur des Messwandlers mit einer vorzugsweise zeitgleich erfassten Referenztemperatur in der Auswerteinheit können externe Temperatureinflüsse als Fehlerursache weitestgehend ausgeschlossen werden. Durch die Auswerteeinheit kann somit ein ausschließlich strombedingtes, eine Überlast am Verbraucher charakterisierendes, Erwärmungsverhalten des Messwandlers ermittelt werden.

Bei einer anstehenden Überlast des Verbrauchers liegt gegenüber dem Nennbetrieb des Verbrauchers am Messwandler ein erhöhter Stromfluss und somit eine erhöhte Temperatur vor. Der erste Temperaturfühler detektiert somit eine strombedingte erhöhte Temperatur. Durch den zweiten Temperaturfühler wird als Referenztemperatur, z.B. eine Temperatur in der Vorrichtung, ermittelt, so dass durch einen Vergleich der Temperatur des ersten Temperaturfühlers mit der Referenztemperatur des zweiten Temperaturfühlers das strombedingte Erwärmungsverhalten des Messwandlers ermittelt werden kann. Auf diese Weise kann ausgeschlossen werden, dass es sich bei dem ermittelten Erwärmungsverhalten des Messwandlers nicht um eine Erwärmung des Messwandlers durch einen Anstieg der Umgebungstemperatur bei der Vorrichtung handelt sondern um eine strombedingte Erwärmung am Messwandler.

Die Erfassung der Temperatur am ersten und zweiten Temperaturfühler erfolgt vorzugsweise zeitgleich.

In einer weiteren vorteilhaften Ausführungsform der Erfindung umfasst die Temperaturmesseinheit einen dritten Temperaturfühler, wobei der erste und dritte Temperaturfühler der ersten Temperaturmesseinheit gleichzeitig jeweils eine Temperatur des Messwandlers erfassen kann, wobei die Auswerteeinheit anhand der erfassten Temperaturen der Temperaturmesseinheit eine anstehende Überlast am Verbraucher ermitteln kann.

In einer weiteren vorteilhaften Ausführungsform der Erfindung umfasst die Temperaturmesseinheit einen ersten, zweiten und dritten Temperaturfühler, wobei der erste, zweite und dritte Temperaturfühler derart zum Messwandler angeordnet ist, dass der erste Temperaturfühler eine Temperatur an einem ersten Messpunkt des Messwandlers, der zweite Temperaturfühler eine Temperatur an einem zweiten Messpunkt des Messwandlers und der dritte Temperaturfühler eine Temperatur an einem dritten Messpunkt des Messwandlers erfassen kann, wobei in Bezug zu einer ersten Seitenfläche des Messwandlers der zweite Messpunkt zwischen dem ersten und dritten Messpunkt liegt.

In Bezug zu einer ersten Seitenfläche des Trägers ist der zweite Temperaturfühler zwischen dem ersten und dritten Temperaturfühler angeordnet. Vorzugsweise liegt die erste Seitenfläche des Messwandlers der ersten Seitenfläche des Trägers parallel gegenüber.

In einer weiteren vorteilhaften Ausführungsform der Erfindung ist mindestens ein Temperaturfühler der Temperaturmesseinheit maximal 2 mm von dem Messwandler beabstandet.

In einer weiteren vorteilhaften Ausführungsform der Erfindung weist der Messwandler eine charakteristische Erwärmungskurve auf. Vorzugsweise weist der Messwandler eine konstante Verlustleistung auf. Der Messwandler ist vorzugsweise ein Shunt.

Der Auswerteeinheit liegt vorzugsweise ein Teil der Erwärmungskurve des Messwandlers als Referenzwert vor, so dass sie durch einen Abgleich des ermittelten Erwärmungsverhaltens mit dem Referenzwert eine anstehende Überlast erkennen kann. Bei dem Abgleich mit dem Referenzwert wird vorzugsweise das Erwärmungsverhalten des Messwandlers während eines definierten Zeitintervalls betrachtet. Es werden somit die ermittelten Temperaturen des Messwandlers durch die Temperaturmesseinheit während eines definierten Zeitintervall analysiert.

In einer weiteren vorteilhaften Ausführungsform der Erfindung ist die Überwachungseinrichtung derart ausgebildet, dass zur Ermittlung des Erwärmungsverhaltens des Messwandlers die Temperatur des Messwandlers wiederholt in einem fest definierten Zeitintervall erfasst und ausgewertet wird.

In einer weiteren vorteilhaften Ausführungsform der Erfindung umfasst die Vorrichtung ferner eine zweite Strombahn, welche analog zur ersten Strombahn ausgebildet ist, d.h. die Vorrichtung umfasst eine eingangsseitige und ausgangsseitige Anschlussstelle für die zweite Strombahn, welche eine zwischen der eingangsseitigen und ausgangsseitigen Anschlussstelle angeordnete erste und zweite Leitung umfasst. Im Normalzustand der Vorrichtung ist die eingangseitige Anschlussstelle der zweiten Strombahn mit der ausgangsseitigen Anschlussstelle der zweiten Strombahn geräteintern elektrisch leitend verbunden. Im Überlastzustand der Vorrichtung hingegen wird der Stromfluss zwischen der eingangseitigen Anschlussstelle und ausgangsseitigen Anschlussstelle der zweiten Strombahn unterbunden. Die Vorrichtung umfasst einen zweiten Messwandler zur Ermittlung einer anstehenden Überlast des elektrischen Verbrauchers, wobei der zweite Messwandler die erste Leitung der zweiten Strombahn mit der zweiten Leitung der zweiten Strombahn elektrisch leitend verbindet. Der zweite Messwandler umfasst ein erstes Material, welches im Normalzustand der Vorrichtung in Hinblick auf die zweite Strombahn durch einen strombedingten Temperaturanstieg am zweiten Messwandler einen Phasenübergang vollzieht.

Die Überwachungseinrichtung der Vorrichtung umfasst insbesondere ferner eine zweite Temperaturmesseinheit, welche auf dem Träger galvanisch getrennt von dem zweiten Messwandler angeordnet ist und eine Temperatur des zweiten Messwandlers erfassen kann. Die Auswerteeinheit kann somit mittels der erfassten Temperaturen der zweiten Temperaturmesseinheit ein zeitliches Erwärmungsverhalten des zweiten Messwandlers ermitteln und durch eine Auswertung des ermittelten zeitlichen Erwärmungsverhaltens des zweiten Messwandlers eine anstehende Überlast am Verbraucher ermitteln. Der Träger umfasst somit mindestens einen Temperaturfühler je Temperaturmesseinheit.

Die zweite Strombahn wird vorzugsweise analog zur ersten Strombahn überwacht, wobei gleiche Komponenten der Vorrichtung, sofern möglich, ebenso für beide Strombahnen genutzt werden können. Es kann z.B. die Auswerteeinheit und/oder der Träger gemeinsam genutzt werden. Es ist ebenso denkbar, dass zur Überwachung der zweiten Strombahn ein analoges System der ersten Strombahn genutzt wird, ohne dass gleiche Komponenten gemeinsam genutzt werden.

Liegt ein dreiphasiges System vor, so umfasst die Vorrichtung vorzugsweise eine dritte Strombahn, welche analog zur ersten Strombahn aufgebaut und überwacht wird. D.h. die dritte Strombahn umfasst einen dritten Messwandler, dessen zeitliches Erwärmungsverhalten durch eine dritte Temperaturmesseinheit ermittelt und durch die Auswerteeinheit ausgewertet werden kann.

In einer weiteren vorteilhaften Ausführungsform der Erfindung sind die Auswerteeinheit und/oder die Temperaturfühler der Temperaturmesseinheit/-en auf dem Träger montiert.

In einer weiteren vorteilhaften Ausführungsform der Erfindung ist der jeweilige Temperaturfühler derart ausgebildet, dass er in Abhängigkeit von der vorliegenden Temperatur einen charakteristischen elektrischen Zustand einnimmt. Der Temperaturfühler ist insbesondere ein Thermoelement (z.B. Thermodraht), ein temperaturabhängiger Halbleiter (z.B. Diode, Kaltleiter) oder ein Widerstandsthermometer (z.B. PT100, PT1000) .

Wird beispielsweise eine Diode als Temperaturfühler verwendet, so kann anhand einer Messung der Spannung an der Diode ein Rückschluss auf die vorliegende Temperatur gewonnen werden. Eine Temperaturänderung des Messwandlers würde folglich zu einer Temperaturänderung an der Diode führen, welche zu einer Spannungsänderung führt.

In einer weiteren vorteilhaften Ausführungsform der Erfindung ist die Vorrichtung dezentral vom Verbraucher angeordnet, d.h. sie ist kein Bestandteil des Verbrauchers.

In einer weiteren vorteilhaften Ausführungsform der Erfindung umfasst der Messwandler das Material Kohlenstoff, insbesondere Graphit.

Im Folgenden werden die Erfindung und Ausgestaltungen der Erfindung anhand der in den Figuren dargestellten Ausführungsbeispiele näher beschrieben und erläutert. Es zeigen:
- FIG 1: eine schematische Darstellung einer Vorrichtung zum Schutz eines elektrischen Verbrauchers,
- FIG 2: eine schematische Darstellung einer Ausführungsform eines Messwandlers einer Vorrichtung gemäß FIG 1,
- FIG 3: eine schematische Darstellung einer alternativen Ausführungsform eines Messwandlers einer Vorrichtung gemäß FIG 1, und
- FIG 4: eine schematische Darstellung einer weiteren alternativen Ausführungsform eines Messwandlers einer Vorrichtung gemäß FIG 1.

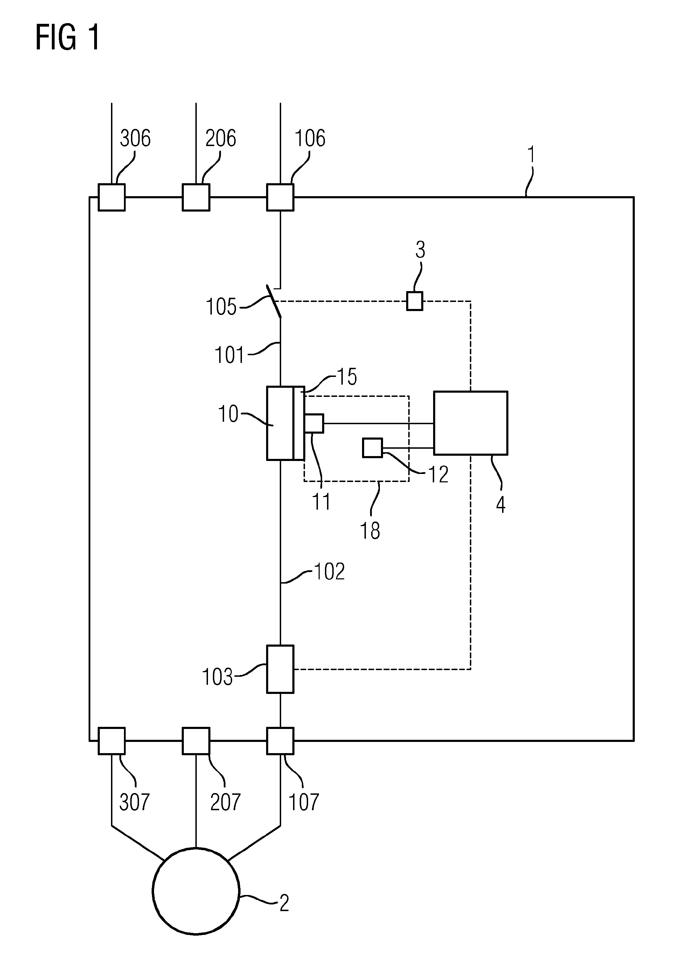

FIG 1 zeigt eine schematische Darstellung einer Vorrichtung 1 zum Schutz eines elektrischen Verbrauchers 2. Die Vorrichtung 1 ist in diesem Ausführungsbeispiel ein Leistungsschalter 1, mit welchem ein Verbraucher 2, nämlich ein dreiphasiger elektrischer Motor 2, überwacht werden kann. Der Leistungsschalter 1 ist hierfür in den Versorgungsstrang des Verbrauchers 2 zwischengeschaltet, so dass mittels des Leistungsschalters 1 die drei Phasen des Verbrauchers 2 überwacht werden können.

Damit der Leistungsschalter 1 in den Versorgungsstrang des elektrischen Verbrauchers 2 integriert werden kann, weist er eingangsseitige Anschlussvorrichtungen 106,206,306 und ausgangsseitige Anschlussvorrichtungen 107,207, 307 auf. In dem Leistungsschalter 1 werden die einzelnen Phasen des Verbrauchers 2 galvanisch getrennt geführt. Die erste Phase des Verbrauchers wird über die erste Strombahn, welche zwischen der ersten eingangsseitigen Anschlussvorrichtung 106 und der ersten ausgangsseitigen Anschlussvorrichtung 107 liegt, geführt und überwacht. Die zweite Phase des Verbrauchers wird über die zweite Strombahn, welche zwischen der zweiten eingangsseitigen Anschlussvorrichtung 206 und der zweiten ausgangsseitigen Anschlussvorrichtung 207 liegt, geführt und überwacht. Die dritte Phase des Verbrauchers wird über die dritte Strombahn, welche zwischen der dritten eingangsseitigen Anschlussvorrichtung 306 und der dritten ausgangsseitigen Anschlussvorrichtung 307 liegt, geführt und überwacht. Aus Gründen der Übersicht, wird in der FIG 1 lediglich die erste Strombahn der Vorrichtung 1 mit ihrer Überwachungseinrichtung dargestellt und genauer beschrieben.

Die erste Strombahn umfasst eine erste Leitung 101, eine zweite Leitung 102, ein Schaltelement 105, einen Messwandler 10 und einen Kurzschlussauslöser 103. Zur Überwachung der ersten Strombahn umfasst die Vorrichtung 1 eine Auswerteeinheit 4, ein Schaltschloss 3, einen Träger 15 und eine Temperaturmesseinheit 18 mit einem ersten und einem zweiten Temperaturfühler 11,12.

Über das Schaltelement 105 der ersten Strombahn kann für die erste Phase der Energiefluss zum Verbraucher 2 unterbrochen werden. Die Ansteuerung des Schaltelements 105 erfolgt über das Schaltschloss 3 der Vorrichtung. Das Schaltschloss 3 ist mit der Auswerteeinheit 4 und hierüber mit dem Kurzschlussauslöser 103 der ersten Strombahn verbunden.

Mittels des Kurzschlussauslösers 103 der ersten Strombahn kann ein auftretender Kurzschluss in der ersten Strombahn und somit in einer Phase des Verbrauchers 2 detektiert werden, so dass bei einer Detektion eines Kurzschlusses die Energiezufuhr zum Verbraucher 2 unterbunden werden kann. Hierfür wird von dem Kurzschlussauslöser 103 ein entsprechendes Signal an das Schaltschloss 3 ausgegeben, so dass dieses das Schaltelement 105 der ersten Strombahn öffnet.

Mittels der Überwachungsvorrichtung kann der Leistungsschalter 1 eine anstehende Überlast des elektrischen Verbrauchers 2 detektieren. Hierfür ist zwischen der ersten und zweiten Leitung 101, 102 der ersten Strombahn der Messwandler 10 angeordnet. In Abhängigkeit der vorliegenden Stromhöhe und Stromflusszeit in der ersten Strombahn liegt eine definierte Erwärmung des Messwandlers 10 vor.

Die Temperatur des Messwandlers 10 kann mittels des ersten Temperaturfühlers 11 (z.B. Diode) der Temperaturmesseinheit erfasst werden. Die erfasste Temperatur am ersten Temperaturfühler 11 der Temperaturmesseinheit wird der Auswerteeinheit 4 bereitgestellt. Der erste Temperaturfühler 11 der ersten Temperaturmesseinheit ist galvanisch von dem Messwandler 10 getrennt und auf der dem Messwandler 10 abgewandten Seitenfläche des Trägers 15 befestigt. Der Träger 15 ist unmittelbar zum Messwandler 10 angeordnet, so dass der erste Temperaturfühler 11 die Temperatur des Messwandlers 10 ermitteln kann.

Mittels des zweiten Temperaturfühlers 12 (z.B. Diode) der Temperaturmesseinheit wird eine Referenztemperatur innerhalb des Leistungsschalters 1 gemessen und der Auswerteeinheit 4 bereitgestellt. Der erste Temperaturfühler 11 erfasst die Temperatur an einem anderen Messpunkt als der zweite Temperaturfühler 12, so dass im aktiven Betrieb des Verbrauchers 2 eine strombedingte Erwärmung des Messwandlers 10 durch zeitgleiche Erfassungen der Temperaturen des ersten und zweiten Temperaturfühlers 11,12 ermittelt werden kann. Durch eine Auswertung der erfassten Temperaturen des ersten und zweiten Temperaturfühlers 11,12 kann die Auswerteeinheit 4 ein Erwärmungsverhalten am Messwandler 10 ermitteln und auswerten. Durch den zusätzlichen Abgleich der Temperatur des ersten Temperaturfühlers 11 mit der Referenztemperatur des zweiten Temperaturfühlers 12 kann die Analyse der ermittelten Temperatur des Messwandlers 10 auf die strombedingte Erwärmung des Messwandlers 10 reduziert werden. Mittels der ermittelten strombedingten Erwärmung des Messwandlers 10 kann folglich ein Rückschluss auf den vorliegenden Stromfluss in der ersten Strombahn und somit ein Rückschluss auf den vorliegenden Betriebszustand des Verbrauchers 2 gewonnen werden, da bei einer anstehenden Überlast ein erhöhter Stromfluss in den einzelnen Phasen des Verbrauchers 2 vorliegt.

Der Auswerteeinheit 4 (z.B. ein Mikrocontroller) ist die Erwärmungscharakteristik des Messwandlers 10 bekannt und als Referenzwert hinterlegt. Die Auswerteeinheit 4 kann folglich durch einen Vergleich des strombedingten Erwärmungsverhaltens des Messwandlers 10, insbesondere während eines definierten Zeitintervalls, mit dem Referenzwert eine anstehende Überlast des elektrischen Verbrauchers 2 ermitteln und entsprechende Gegenmaßnahmen einleiten. Das Zeitintervall in welchem die Analyse des Erwärmungsverhaltens des Messwandlers 10 erfolgt, wird vorzugsweise in Abhängigkeit der vorliegenden Temperatur des Messwandlers 10 gewählt. Bei einer ermittelten anstehenden Überlast des Verbrauchers 2 gibt die Auswerteeinheit 4 ein Warnsignal an das Schaltschloss 3 aus, so dass das Schaltelement 105 geöffnet wird und somit der Energiefluss zum Verbraucher 2 unterbunden wird. Auf diese Weise kann eine thermische Beschädigung des Verbrauchers 2 durch eine Überlast vermieden werden.

Dadurch, dass eine thermische Überlast des Verbrauchers 2 durch eine Auswertung des Erwärmungsverhaltens des Messwandlers 10 ermittelt wird, liegt ebenso ein thermisches Gedächtnis durch den Messwandler 10 vor. Erst nach dem der Messwandler 10 eine definierte Abkühlung erfahren hat, kann das Schaltelement 105 geschlossen werden, so dass der Verbraucher 2 erneut an das Versorgungsnetz geschaltet und wieder mit Strom versorgt wird. Die Ermittlung der notwendigen Abkühlung des Verbrauchers 2 erfolgt durch eine Analyse der Temperatur des Messwandlers 10 mittels des Temperaturfühlers 11 und der Auswerteeinheit 4. Hierfür liegt der Auswerteeinheit 4 ebenso ein Referenzwert vor.

Die Vorrichtung 1 zur Überwachung einer thermischen Überlast eines Verbrauchers 2 wurde in FIG 1 beispielhaft anhand eines Leistungsschalters 1 beschrieben. Ebenso kann die Vorrichtung 1 z.B. ein Überlastrelais sein. In diesem Fall wären der Kurzschlussauslöser 103 sowie gegebenenfalls das Schaltschloss 3 und dessen anzusteuerndes Schaltelement 105 nicht vorhanden.

Die Temperaturfühler 11,12 sind jeweils Halbleiter, insbesondere Dioden, so dass mittels einer Analyse deren Spannung die Temperatur am Temperaturfühler 11,12 ermittelt werden kann. Zur Steigerung der Messgenauigkeit können ebenso mehrere Temperaturfühler an dem Messwandler 10 platziert werden. Ebenso ist es denkbar, dass der zweite Temperaturfühler 12 außerhalb der Vorrichtung 1 platziert ist.

Als Verbraucher 2 kann ebenso eine Leitung gesehen werden, bei welcher ein Schutz vor einer thermischen Überlast sichergestellt werden muss.

Ein großer Vorteil der Vorrichtung 1 und insbesondere der Überwachungseinrichtung besteht darin, dass eine sichere galvanische Trennung zwischen den einzelnen Phasen (Strombahnen) sowie zwischen den Temperaturfühlern 11,12 zu den Strombahnen ermöglicht wird.

Der Messwandler 10 weist üblicherweise bei Nennbetrieb des Verbrauchers 2 eine Temperatur von ca. 60-100°C auf. In diesem Temperaturbereich befindet sich die Vorrichtung 1 im Standardbetriebszustand des Normalzustandes. Bei einem Kurzschluss in einer Strombahn können hingegen für einige Millisekunden maximal Temperaturen von bis zu 500°C am Messwandler 10 entstehen. Diese Höchsttemperatur kühlt sich, in den ersten 10 Millisekunden bis 20 Millisekunden, rasch ab. Danach klingt die Temperatur bei einem Level von ca. 200 bis 250°C langsam für einige Minuten ab. Bei einem Überlastfall können für einige Sekunden Temperaturen von bis zu 300°C am Messwandler 10 vorliegen. Auch diese Temperaturen klingen für einige Minuten langsam ab. Der Temperaturbereich von 100°C bis zum Erreichen des Überlastzustandes (Überschreiten des Überlasttemperaturschwellwert T_{Ü}) ist der erhöhte Betriebszustand des Normalzustandes der Vorrichtung 1.

Der Messwandler 10 umfasst ein erstes Material. Innerhalb des Temperaturbereichs des erhöhten Betriebszustandes erfolgt der Phasenwechsel des ersten Materials des Messwandlers 10. Hierdurch kann zum Einen der Einstellbereich der Vorrichtung 1 vergrößert werden, zum Anderen kann die thermische Belastung innerhalb der Vorrichtung 1, insbesondere auf den Träger 15 sowie auf die auf dem Träger 15 montierten Komponenten (z.B. erster Temperaturfühler 11, Auswerteeinheit 4), minimiert werden.

Sobald die Vorrichtung 1 eine anstehende thermische Überlast oder einen Kurzschluss ermittelt, wird das Schaltschloss 3 der Vorrichtung 1 angesteuert. Das Schaltschloss 3 öffnet das Schaltelement 105 der Strombahn, so dass der Stromfluss über die Strombahn zum Verbraucher 2 unterbunden wird.

Da es sich bei dem dargestellten Verbraucher 2 um einen dreiphasigen Verbraucher 2 handelt, wird bei einer ermittelten anstehenden thermischen Überlast oder einem Kurzschluss durch das Schaltschloss 3 jeweils das Schaltelement 105 der drei Strombahnen angesteuert, so dass der Stromfluss auf den drei Strombahnen unterbunden wird. Der Aufbau der zweiten und dritten Strombahn der Vorrichtung ist analog zur ersten Strombahn aufgebaut, wobei der Träger 15, die Auswerteeinheit 4, das Schaltschloss 3 sowie der zweite Temperaturfühler 12 innerhalb der Vorrichtung 1 gemeinsam genutzt werden. Es ist jedoch ebenso denkbar, dass diese Komponenten bzw. Teile davon separat für die jeweilige Strombahn ausgebildet sind.

Die Ermittlung des vorliegenden Zustandes des angeschlossenen Verbrauchers 2 erfolgt somit über die indirekte Auswertung des Stroms der entsprechenden Strombahn des Verbrauchers. Hierbei wird aufgrund der dabei erzeugten jouleschen Verlustleistung am Messwandler 10 der Temperaturanstieg am Messwandler 10 ausgewertet und anhand der vorliegenden Temperatur am Messwandler 10 ein Rückschluss auf den Zustand des Verbrauchers gewonnen. Schaltgeräte für den Überlastschutz, die sich einer Analyse des Stromverbrauchs des Verbrauchers bedienen sollten insbesondere über einen gewissen Strombereich hinweg funktionieren, da die Wartezeit bis zur Meldung einer Störung vor allem von der Höhe des fließenden Überlaststromes abhängt. Weiter erhöht sich die Anforderung an den Dynamikbereich der Stromerfassung noch, wenn zusätzlich ein variabler Einstellbereich des eigentlichen Betriebsstromes gefordert ist, von dem aus die Überwachung auf Überlastströme stattfinden soll. Für ein technisch nutzbares Signal/RauschVerhältnis ist am unteren Ende des Dynamikbereiches ein Mindesttemperaturhub erforderlich. Da der Temperaturhub in etwa proportional zum Quadrat des Stromes erfolgt, wird dadurch aber auch gleichzeitig das Temperaturniveau am oberen Ende des Dynamikbereiches festgelegt. Bei einer von der Signalerfassung festgelegtem Mindesttemperaturhub am unteren Ende des Erfassungsbereiches müssen zur Erhöhung des Dynamikbereiches zusätzliche technische Maßnahmen getroffen werden, um das Temperaturniveau am oberen Ende des Erfassungsbereichs noch technisch beherrschen zu können. Dies betrifft insbesondere die thermische Belastung der Komponenten der Vorrichtung, insbesondere bezüglich des Isolationsmaterials. Diese hohe thermische Belastung tritt insbesondere im Fehlerfall (Überlast/Kurzschluss) auf und ist dabei zeitlich begrenzt. Dadurch, dass das erste Material einen Phasenwechsel vollzieht kann eine Reduzierung der strombedingten thermischen Belastung am Messwandler 10 erreicht werden.

Der Messwandler umfasst das erste Material, welches möglichst gleichmäßig über den Messwandler verteilt ist. Das erste Material vollzieht im Normalzustand der Vorrichtung bei einer bestimmten Phasenübergangstemperatur T_{P} einen Phasenübergang erster Ordnung. Die dabei aufzuwendende latente Wärme wird dem Gesamtsystem entzogen, so dass ein verminderter Temperaturanstieg vorliegt. Die im ersten Material (Phasenübergangsmaterial) gespeicherte Wärme wird beim Abkühlen der Vorrichtung 1 wieder frei, wenn die Temperatur der des Messwandlers 10 wieder unter die Phasenübergangstemperatur T_{P} sinkt, was die gesamte Abkühlzeit der Vorrichtung verlängert. Die Phasenübergangstemperatur T_{P} ist vorzugsweise deutlich unterhalb der Maximaltemperaturen, welche die angrenzenden Bauteile der Vorrichtung 1 aushalten können. Mittels des ersten Materials kann somit die thermische Gesamtbelastung innerhalb der Vorrichtung 1 reduziert werden.

Der Phasenübergang erfolgt insbesondere im erhöhten Betriebszustand der Vorrichtung wohingegen im Standardbetriebszustand der Phasenübergang hingegen nicht stattfinden soll. Dies wird dadurch sichergestellt, dass die Phasenübergangstemperatur T_{P} über den üblichen Dauerbetriebstemperaturen der Messeinrichtung liegt (T_{P} > 100°C) .

Für eine optimale Funktion des ersten Materials muss sichergestellt sein, dass dessen gesamtes Volumen innerhalb einer möglichst kleinen Zeitspanne dem Phasenübergang unterläuft. Da die gängigen Phasenübergangsmaterialien im Vergleich zu Metallen (aus denen die Strombahn üblicherweise besteht) eher schlechte Wärmeleiter sind, ist es vorteilhaft, dass das erste Material eine möglichst große Oberfläche in Bezug zur Oberfläche des gesamten Messwandlers aufweist und selbst nur dünn aufgetragen ist.

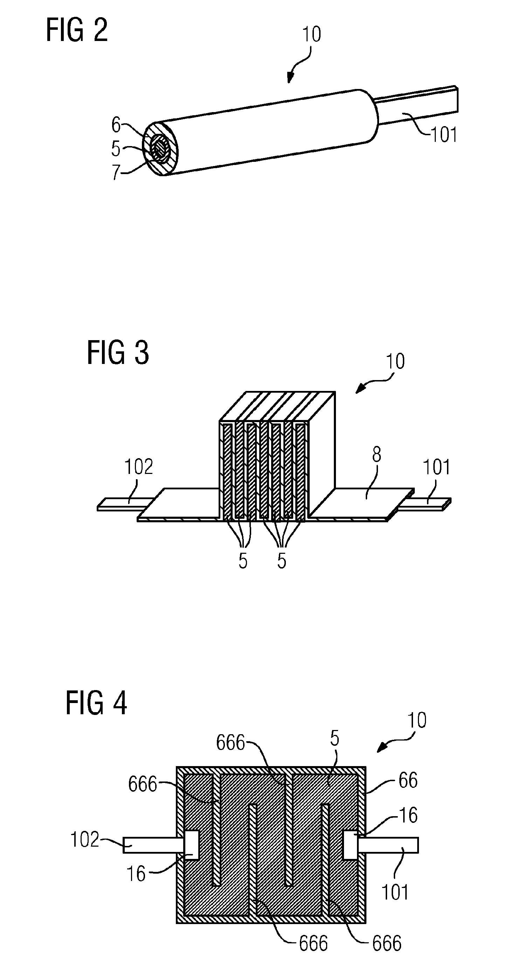

FIG 2 zeigt eine schematische Darstellung einer Ausführungsform eines Messwandlers 10 einer Vorrichtung gemäß der FIG 1. Der abgebildete Messwandler 10 ist als geschlossenes Behältnis 6 ausgebildet, welches in seinem Inneren das erste Material 5 sicher einschließt. In der FIG 2 ist das zylinderförmig ausgebildete Behältnis 6 auf einer Seite im Querschnitt dargestellt, so dass dessen innerer Aufbau ersichtlich ist. Das Material des zylinderförmigen Behältnisses 6 ist elektrisch leitend und mit einem Ende seiner Längsseite mit der ersten Leitung 101 und mit dem gegenüberliegenden Ende mit der zweiten Leitung der ersten Strombahn verbunden. Der Stromfluss zwischen der ersten und zweiten Leitung 101 wird somit über das Behältnis 6 selbst, d.h. über die durch das Behältnis 6 gebildet Hülle für das erste Material 5, geführt. Das Innere des Behältnisses 6 ist mit dem ersten Material 5 gefüllt, welches im Normalzustand der Vorrichtung bei erreichen seiner Phasenübergangstemperatur T_{P} einen Phasenübergang vollzieht. Hierdurch wird die strombedingte Erwärmung des Messwandlers 10 verzögert. Dadurch, dass zwischen dem ersten Material 5 und der Innenseite des zylinderförmigen Behältnisses 6 eine elektrisch isolierende Schicht 7 (hier Oxidschicht) angeordnet ist, kann insbesondere der Alterungsprozess des ersten Materials 6 verlangsamt werden. Das erste Material 5 dient nicht der elektrisch leitenden Verbindung zwischen der ersten und zweiten Strombahn 101.

FIG 3 zeigt eine schematische Darstellung einer alternativen Ausführungsform eines Messwandlers 10 einer Vorrichtung gemäß der FIG 1. Der abgebildete kompakte Messwandler 10 umfasst in diesem Ausführungsbeispiel ein elektrisch leitendes bandförmiges Material 8, welches mäanderförmig geformt ist. Das erste Material 5 ist hierbei zwischen zwei benachbarten Flächen des mäanderförmig geformten elektrisch leitenden bandförmigen Materials 8 angeordnet. Ein Ende des bandförmigen elektrisch leitenden Materials 8 ist mit der ersten Leitung 101 der ersten Strombahn verbunden und das andere Ende des bandförmigen elektrisch leitenden Materials 8 ist mit der zweiten Leitung 102 der ersten Strombahn verbunden. Die gegenüberliegenden benachbarten Flächen des elektrisch leitenden bandförmigen Materials 8 sind derart beabstandet, dass bei einem Übergang des ersten Materials 5 vom festen in den flüssigen Zustand sich das erste Material 5 selbst im Überlastzustand der Vorrichtung nicht verflüchtigt. Das erste Material 5 ist in diesem Ausführungsbeispiel ein elektrisch isolierendes Material (z.B. Polyethylen) und sorgt für die notwendige Isolation der gegenüberliegenden Bereiche des bandförmigen Materials 8.

FIG 4 zeigt eine schematische Darstellung einer weiteren alternativen Ausführungsform eines Messwandlers 10 einer Vorrichtung gemäß der FIG 1. Zu sehen ist die Draufsicht eines im Schnitt dargestellten Messwandlers 10. Der Messwandler 10 umfasst ein elektrisch isolierendes Behältnis 66, in welchem das erste Material 5, welches in diesem Ausführungsbeispiel elektrisch leitend ausgebildet ist, sicher umschlossen ist, so dass das erste Material 5 nach einem Phasenübergang vom festen in den flüssigen Zustand sicher im Behältnis 66 gehalten wird. Durch geeignete Innenkonturen 666, insbesondere Stege, wird innerhalb des Behältnisses 66 eine definierte Strombahn für das erste Material 5 gebildet. Das erste Material 5 ist mittels einer ersten Kontaktstelle 16 auf einer Seite mit der ersten Leitung 101 der ersten Strombahn verbunden und auf seiner gegenüberliegenden Seite mittels einer zweiten Kontaktstelle 16 mit der zweiten Leitung 102 der ersten Strombahn verbunden. Da das erste Material 5 elektrisch leitend ausgebildet ist, sorgt es für die strombedingte Erwärmung des Messwandlers, welche mittels der Temperaturmesseinrichtung erfasst werden kann, so dass die Auswerteeinheit der Vorrichtung eine anstehende Überlast am Verbraucher ermitteln kann.

## Patentansprüche

1. Vorrichtung (1) zum Schutz eines elektrischen Verbrauchers (2) vor einer Überlast, wobei die Vorrichtung (1) eine eingangsseitige Anschlussstelle (106), eine ausgangsseitige Anschlussstelle (107), eine erste Strombahn, welche eine zwischen der eingangsseitigen und ausgangsseitigen Anschlussstelle (106,107) angeordnete erste und zweite Leitung (101,102) umfasst, und eine Überwachungseinrichtung, zur Ermittlung der anstehenden Überlast des elektrischen Verbrauchers (2), umfasst, wobei im Normalzustand der Vorrichtung (1) die eingangseitige Anschlussstelle (106) mit der ausgangsseitigen Anschlussstelle (107) geräteintern elektrisch leitend verbunden ist und im Überlastzustand der Vorrichtung (1) der Stromfluss zwischen der eingangseitigen Anschlussstelle (106) und ausgangsseitigen Anschlussstelle (107) unterbunden ist,
**dadurch gekennzeichnet, dass**
die Überwachungseinrichtung einen Messwandler (10), welcher die erste Leitung (101) mit der zweiten Leitung (102) elektrisch leitend verbindet, umfasst, wobei der Messwandler (10) ein erstes Material (5) umfasst, welches im Normalzustand der Vorrichtung (1) durch einen strombedingten Temperaturanstieg am Messwandler (10) einen Phasenübergang vollzieht.

2. Vorrichtung (1) nach Anspruch 1, wobei der Messwandler (10) ein geschlossenes Behältnis (6,66) umfasst und sich im Inneren des geschlossenen Behältnisses (6,66) das erste Material (5) befindet.

3. Vorrichtung (1) nach Anspruch 2, wobei das Behältnis (6,66) spiralförmig oder mäanderförmig ausgebildet ist.

4. Vorrichtung (1) nach Anspruch 2 oder 3, wobei das Behältnis (6) elektrisch leitend ist.

5. Vorrichtung (1) nach Anspruch 4, wobei zwischen dem elektrisch leitenden Material des Behältnisses (6) und dem ersten Material (5) eine elektrisch isolierende Schicht (7) angeordnet ist.

6. Vorrichtung (1) nach Anspruch 2 oder 3, wobei das Material des Behältnisses (66) elektrisch isolierend ist.

7. Vorrichtung (1) nach Anspruch 1, wobei der Messwandler (10) ein elektrisch leitendes bandförmiges Material (8) umfasst, welches mäanderförmig oder schneckenförmig geformt ist, wobei zwischen zwei benachbarten Flächen des mäanderförmig oder schneckenförmig geformten elektrisch leitenden bandförmigen Materials (8) das erste Material (5) angeordnet ist.

8. Vorrichtung (1) nach einem der vorhergehenden Ansprüche, wobei das erste Material (5) eine maximale Dicke von 0,5 mm aufweist.

9. Vorrichtung nach einem der vorhergehenden Ansprüche, wobei die Überwachungseinrichtung ferner eine Temperaturmesseinheit (18), einen Träger (15) und eine Auswerteeinheit (4) umfasst, wobei die Temperaturmesseinheit (18) auf dem Träger (15) galvanisch getrennt von dem Messwandler (10) angeordnet ist und eine Temperatur des Messwandlers (10) erfassen kann, wobei die Auswerteeinheit (4) mittels der erfassten Temperaturen der Temperaturmesseinheit (18) ein zeitliches Erwärmungsverhalten des Messwandlers (10) ermitteln kann und durch eine Auswertung des ermittelten zeitlichen Erwärmungsverhaltens des Messwandlers (10) eine anstehende Überlast am Verbraucher (2) ermitteln kann.

10. Vorrichtung (1) nach Anspruch 9, wobei bei einer ermittelten anstehenden Überlast die Auswerteinheit (4) ein Schaltschloss (3) der Vorrichtung (1) betätigt, so dass durch die Betätigung des Schaltschlosses (3) ein Stromfluss über die erste Strombahn unterbunden wird.

11. Vorrichtung (1) nach Anspruch 9 oder 10, wobei die Auswerteeinheit (4) anhand eines Vergleichs des ermittelten Erwärmungsverhaltens des Messwandlers (10) mit einem in der Auswerteeinheit (4) hinterlegten Referenzwert eine anstehende Überlast am Verbraucher (2) ermitteln kann.

12. Vorrichtung (1) nach einem der Ansprüche 9 bis 11, wobei die Temperaturmesseinheit (18) einen ersten Temperaturfühler (11) zum Erfassen der Temperatur des Messwandlers (10) umfasst.

13. Vorrichtung (1) nach Anspruch 12, wobei die Temperaturmesseinheit (18) ferner einen zweiten Temperaturfühler (12) umfasst, wobei der zweite Temperaturfühler (12) eine Referenztemperatur erfassen kann, wobei die Auswerteeinheit (4) eine anstehende Überlast am Verbraucher (2) mittels erfassten Temperaturen des ersten und zweiten Temperaturfühlers (11,12) ermitteln kann.

14. Vorrichtung (1) nach Anspruch 12 oder 13, wobei die Temperaturmesseinheit (18) einen dritten Temperaturfühler umfasst, wobei der erste und dritte Temperaturfühler (11) der ersten Temperaturmesseinheit (18) jeweils eine Temperatur des Messwandlers (10) erfassen kann, wobei die Auswerteeinheit (4) anhand der erfassten Temperaturen der Temperaturmesseinheit (18) eine anstehende Überlast am Verbraucher (2) ermitteln kann.

15. Vorrichtung (1) nach einem der vorhergehenden Ansprüche, wobei die Temperaturmesseinheit (18) einen ersten, zweiten und dritten Temperaturfühler (11,12) umfasst, wobei der erste, zweite und dritte Temperaturfühler (11,12) derart zum Messwandler (10) angeordnet ist, dass der erste Temperaturfühler (11) eine Temperatur an einem ersten Messpunkt des Messwandlers (10), der zweite Temperaturfühler (12) eine Temperatur an einem zweiten Messpunkt des Messwandlers (10) und der dritte Temperaturfühler eine Temperatur an einem dritten Messpunkt des Messwandlers (10) erfassen kann, wobei in Bezug zu einer ersten Seitenfläche des Messwandlers (10) der zweite Messpunkt zwischen dem ersten und dritten Messpunkt liegt.
